# EUROPÄISCHE PATENTSCHRIFT

(11) **EP 1 044 560 B1**
(45) Veröffentlichungstag und Bekanntmachung des Hinweises auf die Patenterteilung: **20.07.2005**
(21) Anmeldenummer: 99944548.9
(22) Anmeldetag: 28.08.1999
(51) Int. Cl.: H04M 15/00

(54) **VERFAHREN UND KOMMUNIKATIONSNETZ ZUR GEBÜHRENABRECHNUNG FÜR DIE SPRACHTELEFONIE MITTELS SPRACHERKENNUNG**
METHOD AND COMMUNICATIONS NETWORK FOR BILLING CALL CHARGES FOR VOICE TELEPHONY BY VOICE RECOGNITION
PROCEDE ET RESEAU DE COMMUNICATION DESTINES A LA TAXATION DE LA TELEPHONIE CLASSIQUE PAR RECONNAISSANCE VOCALE

(30) Priorität: 09.09.1998 DE 19841167
(43) Veröffentlichungstag der Anmeldung: 18.10.2000
(73) Patentinhaber: Deutsche Telekom AG, 53113 Bonn (DE)
(72) Erfinder: SUSEN, Axel, D-52062 Aachen (DE); BROCK, Stefan, D-53737 Sankt Augustin (DE)
(74) Vertreter: Mierswa, Klaus
(86) Internationale Anmeldenummer: PCT/EP1999/006347
(87) Internationale Veröffentlichungsnummer: WO 2000/014945

(56) Entgegenhaltungen:
- US-A- 5 325 421
- US-A- 5 623 539
- "ACCOUNTING SYSTEM FOR ROLM 244 PC ADAPTER USING CALLER VOICE RECOGNITION" IBM TECHNICAL DISCLOSURE BULLETIN,US,IBM CORP. NEW YORK, Bd. 36, Nr. 3, Seite 309-310 XP000354788 ISSN: 0018-8689

## Beschreibung

### Technisches Gebiet:

Die Erfindung betrifft ein Verfahren zur Gebührenabrechung für die Sprachtelefonie an einem Festnetz- oder Mobiltelefonanschluß sowie ein Kommunikationsnetz mit einem derartigen Gebührenabrechungssystem.

### Stand der Technik:

Die Vergebührung von Telekommunikationsdienstleistungen an einem Telefonanschluß erfolgt in der Regel anschlußbezogen, d.h. das Abrechnungskonto des Inhabers des Anschlusses wird mit den Gebühren belastet, die für eine von diesem Anschluß geführte Kommunikationsverbindung vom Netzanbieter berechnet werden. Dabei besteht bei einfachen Anschlüssen keine Möglichkeit, die Abrechnung automatisch in Abhängigkeit von einzelnen Nutzern des Anschlusses aufzuschlüsseln. Zwar ist es bekannt, die Gebühren personenbezogen aufzuschlüsseln, indem Gebührenimpulse von einer Vermittlungsstelle des Telefonnetzes zum Anschluß übertragen werden, die während einer Verbindung angefallenen Gebühreneinheiten mit einem Zähler registriert und schließlich vom jeweiligen Nutzer in einer persönlichen Gebührenliste notiert werden. Die gesamten am Anschluß anfallenden Kosten werden dem Anschlußinhaber durch den Netzanbieter berechnet. Dieses Vorgehen zur personenbezogenen Einzelabrechnung erfordert von jedem Nutzer des Anschlusses die Bereitschaft zur Mitarbeit. Ist ein Nutzer beim Notieren der Gebühreneinheiten nachlässig, so geht dies zu Lasten aller Nutzer bzw. des Anschlußinhabers. Des weiteren muß der Anschlußinhaber die Gebühren stets von seinen Mitnutzern einfordern: diese sind nicht, direkt gegenüber dem Netzanbieter verpflichtet. Dieses Vorgehen ist somit umständlich und fehleranfällig.

Ein Beispiel für eine steuerbare Gebührenzuordnung ist in der Patentanmeldung US-A-5 325 421 gegeben. Zunehmend stellt sich das Problem der personenbezogenen Abrechnung von Telefonverbindungen auch bei Heimarbeitsplätzen. Die Kosten für ein geschäftlich geführtes Gespräch des Heimarbeiters können derzeit nicht automatisch von den Kosten privat geführter Gespräche getrennt werden. Stattdessen muß auch hier der Heimarbeiter die Telefonkosten notieren und dem Arbeitgeber selbst in Rechnung stellen bzw. er erhält vom Arbeitgeber einen separaten Anschluß zur Verfügung gestellt.

Bei Nebenstellenanlagen größerer Unternehmen mit einer Vielzahl von Nebenstellenanschlüssen sind Verfahren bekannt, bei welchen der Nutzer eines Endgerätes einen Zugangscode eingeben muß, um eine Amtsverbindung und/oder Verbindung zu bestimmten Zielrufnummern herstellen zu können. Bei diesen Verfahren gibt der Teilnehmer beispielsweise zur Herstellung von Privatverbindungen über die Tastatur des Endgerätes einen persönlichen Zugangscode (PIN) ein, welcher von der Nebenstellenanlage, z.B. einem Telefon-Server, ausgewertet wird. Wurde die Berechtigung und Identität des Teilnehmers auf diese Weise festgestellt, so ist der entsprechende Nebenstellenanschluß zur Herstellung einer Amts- oder Fernverbindung freigeschaltet bzw. der Telefon-Server leitet den Verbindungsaufbau für die angeforderte Verbindung ein. Die Gebühren des geführten Gesprächs werden dann automatisch dem jeweiligen Nutzer in Rechnung gestellt bzw. von seinem Gehalt abgezogen. Dieses Verfahren der Codeeingabe vor jedem Anruf ist jedoch sehr umständlich. Des weiteren besteht dabei häufig ein Anreiz, die Belastung des persönlichen Abrechnungskontos zu vermindern indem von Nebenstellenanschlüssen, die grundsätzlich oder für bestimmte Verbindungen freigeschaltet sind, unbefugt telefoniert wird. Insoweit besteht auch bei diesen Verfahren keine Möglichkeit zur im Prinzip vollständig personenbezogenen Gebührenabrechung.

### Technische Aufgabe:

Der Erfindung liegt daher die Aufgabe zugrunde, ein Verfahren zur Gebührenabrechung für die Sprachtelefonie zur Verfügung zu stellen, welches eine im Prinzip vollständig personenbezogene Gebührenabrechung unter Vermeidung zusätzlicher Handlungen seitens des Nutzers ermöglicht.

### Offenbarung der Erfindung:

Die Aufgabe wird gelöst durch ein Verfahren zur Gebührenabrechung für die Sprachtelefonie an einem Festnetz- oder Mobiltelefonanschluß mittels Spracherkennung gemäß Anspruch 1. Vorteilhafte Weiterbildungen der Erfindung sind Gegenstand der Unteransprüche.

Erfindungsgemäß werden vor oder nach Aufbau der. Kommunikationsverbindung zum gerufenen Teilnehmer Sprachsignale des rufenden Teilnehmers aufgezeichnet und mittels Spracherkennungs-Algorithmen analysiert sowie an den gerufenen Teilnehmer weitergeleitet, falls die Kommunikationsverbindung bereits besteht. Die Sprachsignale werden zum Zwecke der Zuordnung mit einem Referenzdatensatz oder mehreren Referenzdatensätzen verglichen. Dabei ist ein Referenzdatensatz einem Abrechnungskonto in eindeutiger Weise zugeordnet; es können auch mehrere Referenzdatensätze einem Abrechnungskonto zugeordnet sein. Auf diese Weise dient das Sprachsignal des rufenden Teilnehmers zur Identifizierung eines Abrechnungskontos. Während der Verbindung werden die anfallenden Gebühren für die Kommunikationsverbindung in an sich bekannter Weise bestimmt, z.B. von Netzanbieter oder der Nebenstellenanlage. Mit den Gebühren wird dasjenige Abrechnungskonto belastet, dem der Referenzdatensatz zuwiesen ist, welchem die Sprachsignale zugeordnet wurden, oder es wird ein Standard-Abrechnungskonto belastet, wenn keine Zuordnung zu einem Referenzdatensatz getroffen werden kann.

Vorzugsweise erfolgt die Spracherkennung nach Beginn der Kommunikationsverbindung online, d.h. direkt während der Kommunikationsverbindung. Die Sprachsignale des rufenden Teilnehmers werden wie beim polizeilichen oder nachrichtendienstlichen Abhören aus der Datenleitung abgegriffen und einer Spracherkennungseinheit zugeführt, welche online auswertet. Die Sprachdaten werden parallel an den Kommunikationspartner übertragen. Kann die Spracherkennungseinheit die Zuordnung zu einem Referenzdatensatz treffen, so wird die Analyse des Sprachsignals beendet und die Darenverarbeitungskapazität der Spracherkennungseinheit steht zur Identifizierung weiterer Anrufer zur Verfügung.

Alternativ zur Spracherkennung während der Verbindung kann die Zuordnung des Sprechers zu einem Abrechnungskonto vor Verbindungsaufbau im Rahmen einer vom Sprecher zu durchlaufenden Authentifizierungsprozedur vorgenommen werden. Dabei wird der Benutzer des Telefons zur Eingabe einer Sprachprobe aufgefordert, und die Verbindung erst dann aufgebaut, wenn die Sprachprobe identifiziert und als der Sprecher als autorisiert erkannt wurde.

Neben der Online-Spracherkennung kann das Sprachsignal des rufenden Teilnehmers auch aufgezeichnet und als Sprachprobe zwischengespeichert werden. Die gespeicherte Sprachprobe wird dann noch während oder nach der Kommunikationsverbindung analysiert.

Das erfindungsgemäße Verfahren hat den großen Vorteil, daß der Nutzer keinerlei Handlungen vornehmen muß, um die anfallenden Gebühren zu bestimmen und in einer Abrechungsliste zu notieren. Er kann, unter Umständen abgesehen von einer sprachlichen Passworteingabe, frei telefonieren, wobei auch das Gespräch selbst nicht behindert wird. Die Rechnungsstellung kann durch den Netzbetreiber direkt an den Nutzer erfolgen, alternativ kann auch die Rechnung an den Anschlußinhaber nach Personen aufgeschlüsselt erfolgen. Des weiteren kann auf eine umständliche manuelle Passworteingabe vor Aufbau der Kommunikationsverbindung verzichtet werden, da die Zuordnung des Gesprächs bzw. der Gebühren zu einem bestimmten Abrechungskonto durch Spracherkennung während des Gesprächs getroffen wird.

Zur Teilnehmeridentifizierung werden diejenigen Sprachsignale untersucht, welche auch an den Kommunikationspartner übertragen werden. Die Übertragung von Sprachsignalen zwischen den Gesprächsteilnehmern wird dabei nicht beeinträchtigt. Somit kann im Prinzip an jedem Anschluß personenbezogen abgerechnet werden, ohne den normalen Ablauf beim Telefonieren durch eine zusätzliche Codeeingabe zu beeinträchtigen.

Zur Spracherkennung sind mehrere Möglichkeiten bekannt und zur Realisierung der Erfindung einsetzbar. Es gibt Spracherkennungs-Algorithmen zur Erkennung von Bedeutungsinhalten gesprochener Sprache, welche eine aktuelle Sprachprobe mit einer bereits hinterlegten Sprachprobe, die einem bestimmten gesprochenen Wort entspricht, vergleichen. Dabei entspricht die hinterlegte Sprachprobe beispielsweise einem gesprochenem Wort, dessen Textdarstellung ebenfalls hinterlegt ist. Durch Feststellung einer Übereinstimmung zwischen der aktuellen und der hinterlegten Sprachprobe kann somit auch der aktuellen Spracheingabe eine Textdarstellung, z. B. als ASCII-Darstellung zugewiesen werden, wodurch prinzipiell Inhalte einer Sprachmitteilung erkennbar sind. Solche Spracherkenner werden beispielsweise bei der Sprachsteuerung von Computern und dergleichen eingesetzt.

Die hinterlegte Sprachprobe wird dabei in der Regel während einer Trainingsphase vom zukünftigen Benutzer eingegeben. Dies führt dazu, daß in der Regel auch nur die aktuelle Spracheingabe dieses speziellen Benutzers vom Spracherkenner zuverlässig erkannt werden kann, da sich auch bei gleichem Bedeutungsinhalt Sprachproben verschiedener Nutzer aufgrund des individuellen Sprachverhaltens unterscheiden.

Dieses Prinzip kann in einer Weiterbildung der Erfindung zur personenbezogenen Abrechnung an einem Telefonanschluß eingesetzt werden. Dabei sind die Referenzdatensätze Referenz-Sprachproben, welche bestimmten, von einer Person gesprochenen Wörtern entsprechen, z.B. Begrüßungsformeln, dem Vor- oder Zunamen einer zugangsberechtigten Person oder sonstigen, häufig in einem Telefongespräch vorkommenden Ausdrücken. Diese Sprachproben werden in einer Trainingsphase aufgezeichnet und in einem Speicher in digitaler Form als Referenzdatensatz hinterlegt. Zur Durchführung des Verfahrens analysieren die Spracherkennungs-Algorithmen die aufgezeichnete Sprachprobe hinsichtlich des Auftretens von Teilen, also einzelnen Wörtern oder Ausdrücken, die mit der Referenz-Sprachprobe innerhalb einer vorgegebenen Toleranz übereinstimmen. Wichtig ist dabei nicht der Bedeutungsinhalt der Referenz oder des aktuellen Sprachsignals, sondern allein das individuelle Sprachverhalten der Zugangsberechtigten bzw. telefonierenden Person, das sich in einem bestimmten charakteristischen Muster der Referenz-Sprachprobe niederschlägt.

Aus diesem Grunde sieht eine andere bevorzugte Ausführungsform vor, kein eigentliches Worterkennungssystem wie das bereits geschilderte zu verwenden, sondern die eingegebene Sprachprobe unabhängig von ihrem Bedeutungsinhalt nach bestimmten, für den Nutzer charakteristischen Sprachmustern zu analysieren. Eine bestimmte Sprachmelodie, Stimmlage. Dialekt und dergleichen, welche die Stimme einer Person für das menschliche Ohr nahezu einmalig erscheinen lassen, äußert sich in charakteristischen Merkmalen einer von dieser Personen genommenen Sprachprobe, z.B einer bestimmten Frequenz- und/oder Amplitudenverteilung, welche zur Identifizierung dieser Personen auf elektronischem Wege dienen kann. Erfindungsgemäß werden daher Referenz-Sprachmuster, z.B. Frequenz- oder Amplitudenmuster, die unabhängig vom Bedeutungsinhalt für eine Person charakteristisch sind, als Referenzdatensätze gespeichert. Sie werden beispielsweise durch statistische Auswertung einer Sprachprobe mittels eines entsprechenden Spracherkennungs-Algorithmus gewonnen. Zur Identifizierung der aktuellen, während eines Gesprächs abgegebenen Sprachsignale bzw. Sprachdaten erstellen dann die Spracherkennungs-Algorithmen durch statistische oder dynamische Auswertung der Sprachsignale ein entsprechendes Sprachmuster derselben. Statistische Auswertung bezieht sich dabei in erster Linie auf eine Frequenzanalyse, wobei Klang und Stimmlage des Sprechers identifiziert werden können; dynamische Auswertung bezieht sich auf eine Auswertung der Dynamik des Sprachsignals, d.h. auf den Amplitudenverlauf und damit auf eine bestimmte Sprachmelodie. Beide Verfahren sind geeignet, einen Sprecher zur identifizieren. Das aus dem aktuellen Sprachsignal erstellte Sprachmuster wird dann mit den Referenz-Sprachmustern verglichen. Es wird festgestellt, ob die charakteristischen Merkmale beider Muster übereinstimmen. Wichtig dabei ist, daß zur Erstellung des Referenz-Sprachmusters aus einer Referenz-Sprachprobe derselbe Spracherkennungs-Algorithmus verwendet ist, mit welchem auch die aktuelle Sprachprobe analysiert wird.

Der Vorteil dieser Variante liegt darin, daß die Analyse der individuellen Sprachmuster eine wesentlich genauere Identifizierung der sprechenden Person ermöglicht als die Suche nach bestimmten Wörtern, welche zwar auch individuell geprägt sind, bei welchen die individuelle Prägung aufgrund der Kürze der Wörter jedoch unter Umständen nicht immer zuverlässig feststellbar ist. Die zweite Variante ist daher insbesondere zur Benutzeridentifizierung und Zuweisung eines Abrechungskontos während eines laufenden Gesprächs vorteilhaft. Die erste Variante hat Vorteile zur Identifizierung von Geschäftsgesprächen an einem Heimarbeitsplatz, bei denen sich der Heimarbeiter mit einer vorher festgelegten Unternehmensbezeichnung meldet, welche vom Worterkennungssystem identifiziert wird.

Die Referenzdatensatze entsprechen dem Kreis der Nutzer des Anschlusses, Z. B. allen Bewohnern einer Wohngemeinschaft, allen Familienmitgliedern oder den Angestellten eines Unternehmens. Dabei können je Nutzer auch mehrere Referenzdatensätze gespeichert sein. Die Referenzdatensätze sind beispielsweise in einer Abrechungstabelle abgelegt, welche festlegt, welches Abrechungskonto belastet werden soll, wenn eine bestimmte Person telefoniert. Dabei kann die Zuordnung einer Person zu einem Abrechnungskonto zusätzlich auch von den gewählten Rufnummern oder von der Verbindungsart abhängig sein oder sich als Funktion der Tageszeit ändern.

Die Sprachprobe wird vorzugsweise direkt nach der Herstellung der Verbindung während eines vorbestimmten Zeitintervalls, z. B. 30 bis 60 Sekunden, aufgezeichnet. Nach Ablauf des Zeitintervalls wird die Aufzeichnung beendet und die Sprachprobe analysiert.

Für eine anpassungsfähige Gebührenzuweisung auch bei welchselnden Sprechern ist des weiteren vorgesehen, in regelmäßigen Abständen während der Verbindungsdauer Sprachproben aufzuzeichnen und den Sprecher bzw. das dazugehörige Abrechungskonto anhand dieser in regelmäßigen zeitlichen Abständen zu identifizieren. Auf diese Weise kann auch ein Sprecherwechsel festgestellt werden, so daß die Zuordnung der Gebühren für die einzelnen Abschnitte der Kommunikationsverbindung zu den Abrechnungskonten entsprechend angepaßt werden kann.

Aus Datenschutzgründen wird vorzugsweise die aufgezeichnete und zwischengespeicherte Sprachprobe nach Beendigung der Spracherkennung automatisch wieder gelöscht, falls sie einem Referenzdatensatz zugeordnet werden konnte.

Je nach Zielsetzung der personenbezogenen Gebührenabrechnung ist es vorteilhaft, wenn das Verfahren nur zu bestimmten Tages- und/oder Wochenzeiten und/oder nur für bestimmte Anrufziele, z. B. nur für Fernverbindungen, durchgeführt wird, so daß Gebühren personenabhangig einem anderem als dem Standardkonto zugewiesen werden können. Gebühren für Verbindungen außerhalb dieser Zeiten bzw. andere Anrufziele werden dem Standardabrechnungskonto angewiesen. Diese Variante ist besonders vorteilhaft für die Abrechnung von Telefongesprächen an einem Heimarbeitsplatz. In diesem Fall werden die während einer vorbestimmten Arbeitszeit geführten Gespräche, bei denen die Stimme des Heimarbeiters identifiziert wurde, dem Abrechnungskonto des Arbeitgebers zugewiesen, während alle anderen Gespräche dem Standardabrechnungskonto, also der normalen Privatrechnung, zugewiesen werden.

Des weiteren ist vorgesehen, daß das Verfahren abschaltbar ist, indem der Nutzer vor Herstellung einer Kommunikationsverbindung eine Tastenkombination, z. B. einen PIN-Code, oder ein akustisches Signal, z. B. eine Folge von im Mehrfrequenzverfahren kodierten Signalen, eingibt und durch diesen Zugangscode die Abrechnung vom Standardkonto oder einem anderen Konto herbeiführt. So kann beispielsweise auch ein Heimarbeiter während der Arbeitszeit ein Privatgespräch führen, ohne daß das Gebührenkonto des Arbeitgebers belastet wird.

In einer weiteren vorteilhaften Weiterbildung der Erfindung ist die personenbezogene Abrechnung verbunden mit einer Überwachung der Zugangsberechtigung. Die Referenzdatensätze legen dabei den Kreis der berechtigten Personen fest. Die Kommunikationsverbindung wird dann automatisch unterbrochen, falls die aufgezeichnete Sprachprobe keinem Referenzdatensatz zugeordnet werden kann.

Die Aufgabe wird weiterhin gelöst durch ein Kommunikationsnetz, welches ein Festnetz oder ein Mobilfunknetz sein kann, mit einem Vergebührungssystem, das Gebühren für eine Kommunikationsverbindung bestimmt und einem Abrechnungskonto zuweist gemäß Anspruch 12. Erfindungsgemäß weist das Telefonnetz Mittel auf, die auf eine Datenleitung, über welche Sprachsignale vom rufenden Anschluß zum gerufenen Anschluß wenigstens teilweise übertragen werden, zuzugreifen sind. Des weiteren ist wenigstens ein Speicher vorhanden, in welchem Referenzdatensätze hinterlegt sind, welche einem Kreis üblicher Nutzer des Anschlusses zugeordnet sind. Des weiteren ist wenigstens eine Steuereinheit mit einer Spracherkennungseinheit vorhanden, welche auf den Speicher zuzugreifen und das Sprachsignal mittels Spracherkennungs-Algorithmen zu analysieren und durch Vergleich mit den Referenzdatensätzen einem Anrechnungskonto zuzuordnen imstande ist. Dabei veranlaßt die Steuereinheit die Erzeugung eines diese Zuordnung anzeigenden Signals sowie dessen Übermittlung an das Vergebuhrungssystem.

Unter Kommunikationsnetz wird dabei die Gesamtheit aller Anschlüsse mit den Vermittlungsstellen bzw. Umsetungsstationen und gegebenenfalls Datenleitungen und sonstiger Vermittlungs- und Übertragungsintelligenz verstanden. Die an der Erfindung beteiligten Elemente können allerdings nur in einem kleinen Teil des Netzes angeordnet sein, z.B. in einer Nebenstellenanlage. Das erfindungsgemäße Kommunikationsnetz ermöglicht vorteilhaft die personenbezogene Abrechnung an einzelnen Anschlüssen und somit die Durchführung des erfindungsgemäßen Verfahrens.

Vorzugsweise weist das Netz weiterhin Mittel zur Aufzeichnung und Speicherung eines vom rufenden Anschluß übertragenes Sprachsignals auf, insbesondere wenigstens einen Speicher auf, in welchem die aufgezeichneten Sprachsignale als Sprachprobe zwischengespeichert sind.

Die Identifizierung des Nutzers und damit des Abrechnungskontos kann erfindungsgemäß an verschiedenen Stellen innerhalb des Netzes stattfinden.

Zur lokalen personenbezogenen Abrechnung durch den Anschlußinhaber gegenüber den Nutzern des Anschlusses sind die Steuereinheit und die Speicher für Referenzdaten und gegebenenfalls Sprachproben vorzugsweise innerhalb einer Telefonanlage, insbesondere Nebenstellenanlage oder einem einfachen Anschluß, angeordnet. Die Gebühren werden dann vom Netzanbieter nutzerneutral bestimmt und dem Anschlußinhaber berechnet, der Anschlußinhaber kann die jeweiligen Gebühren mit einem entsprechenden Telefonnetz bzw. Telefonanlage jedoch dem jeweiligen Nutzer automatisch zuordnen. Die Telefonanlage weist dazu vorzugsweise bereits ein Vergebührungssystem auf, das Gebühren einzelnen Nutzern zuzuweisen imstande ist. Dieses lokale Vergebührungssystem, das die Verpflichungen einzelner Nutzer der Telefonanlage gegenüber dem Anschlußinhaber protokolliert, ist unabhängig vom Vergebührungssystem des Telefonnetzes, das einer Mehrzahl von Anschlußinhabern die jeweils anfallenden Kosten berechnet. Die gespeicherten Referenzdatensätze entsprechen dabei Referenz-Sprachproben oder -Sprachmustern einzelner Nebenstellennutzer. Es wird, gegebenenfalls in Abhängigkeit von Anrufzeit, -ziel oder weiteren Parametern, das Abrechungskonto desjenigen Nebenstellennutzers mit den vom Vergebührungssystem berechneten Gebühren belastet, dessen Sprache von der Spracherkennungseinheit erkannt wurde. Die Steuereinheit ist beispielsweise Teil einer Datenverarbeitungsanlage, wie z.B. einem Telefon-Server, welche die von einzelnen Nebenstellenanschlüssen vorgenommenen Verbindungen protokolliert, einzelne Nebenstellenanschlüsse zeitabhängig oder für bestimmte Anrufziele sperrt und gegebenenfalls einen PIN-Code-Abfrage vornimmt.

Alternativ können die Steuereinheit und die entsprechenden Speicherplätze außerhalb des Kundenbereichs im eigentlichen Telefonnetz in einer Vermittlungsstelle angeordnet sein. Dabei sind im Referenzdaten-Speicher die Referenzdaten der Vermittlungsstelle zugeordneten Anschlüsse hinterlegt. Vorzugsweise sind die Referenzdaten anschlußspezifisch hinterlegt, so daß von der Vermittlungsstelle zu jedem Anschluß ein vorbestimmter Personenkreis überprüft wird. Die Steuereinheit veranlaßt die Vermittlungsstelle zur Erzeugung von Gebührensignalen (Call Data Records), welche Informationen über das identifizierte Abrechungskonto bzw. das Standardabrechnungskonto enthalten und welche von der Vermittlungsstelle an das Vergebührungssystem des Telefonnetzes übertragen werden. Auf diese Weise kann mit einer gemeinsamen Steuereinheit die personenbezogene Gebührenabrechnung für Nutzer einer Vielzahl von Anschlüssen in der Vermittlungsstelle zentral kontrolliert werden, ohne daß es einer Modifikation der Anschlüsse auf Kundenseite bedarf.

Die personenbezogene Gebührenabrechnung kann weiter zentralisiert werden, indem die Steuereinheit und die entprechenden Speicher einem SCP (Service Control Point) eines Intelligenten Netzes zugeordnet sind. Die Steuereinheit veranlaßt den SCP zur Erzeugung von Gebührensignalen (Call Data Records), welche Informationen über das identifizierte Abrechungskonto enthalten und welche vom SCP an das Vergebührungssystem des Intelligenten Netzes übertragen werden. Das intelligente Netz ist dabei ein offenes Telefonnetz, welches auf das traditionelle Telefonnetz aufsetzt und verschiedene Telefondienste mit neuen Leistungsmerkmalen ermöglicht, beispielsweise gebührenfreies Telefonieren unter bestimmten Rufnummern oder das Erreichen verschiedener Dienststellen eines Unternehmens unter einer über ein weiteres Gebiet einheitlichen Rufnummer. Der zentrale Rechner, welcher die dazu notwendigen Schaltinformationen enthalt, ist der sogenannte SCP. Auch der Übergang von einem Telefonnetz eines Netzanbieters zu dem eines anderen Netzanbieters erfolgt über IN-ähnliche Strukturen.

Kurzbeschreibung der Zeichnung, in der zeigen:
- Figur 1: Schematisch den Ablauf des erfindungsgemäßen Verfahrens in zwei Varianten;
- Figur 2: ein weiteres Flußdiagramm des erfindungsgemäßen Verfahrens
- Figuren 3-5: Beispiele für Kommunikationsnetze zur Durchführung des erfindungsgemäßen Verfahrens.

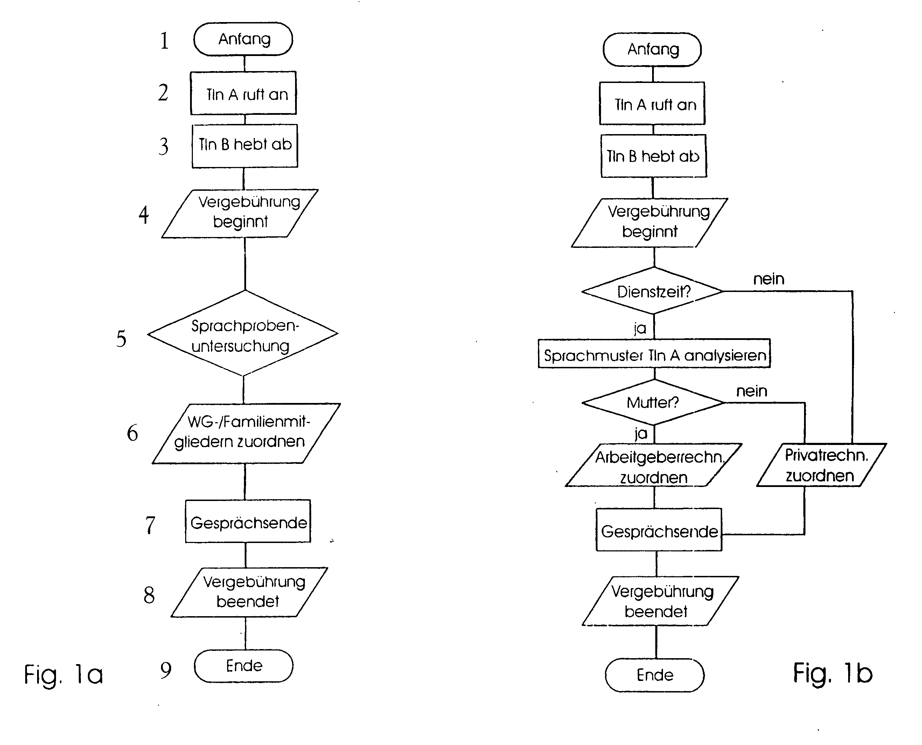

In Figur 1A ist der Ablauf des erfindungsgemäßen Verfahrens schematisch dargestellt. Zu Beginn des Verfahrens ruft Teilnehmer A eine Zielrufnummer an. Die Kommunikationsverbindung ist hergestellt, sobald Teilnehmer B abhebt. Zu diesem Zeitpunkt beginnt die Vergebührung. Üblicherweise beginnen nach Verbindungsherstellung beide Teilnehmer zu sprechen. Die Sprachsignale des rufenden Teilnehmers A werden automatisch abgegriffen, wobei der Zugriff auf die Datenleitung eine vorbestimmte Zeitspanne, etwa 30 Sekunden bis eine Minute, dauert. Das Zugreifen auf eine Verbindungsleitung über welche die Sprachsignale zwischen beiden Teilnehmern übertragen werden, erfolgt ohne Störung des übertragenen Signals, so daß die Identifizierung des Nutzers das Gespräch nicht beeinträchtigt.

Die Sprachsignale des Teilnehmers A werden im folgenden analysiert und mit in einer Abrechnungstabelle hinterlegten Referenzdatensätzen verglichen. Die Abrechnungstabelle enthält beispielsweise die Zuordnung der Referenzdatensätze zu einzelnen Mitgliedern einer Wohngemeinschaft oder einer Familie. Können die aktuellen Sprachdaten einem der Referenzdatensätze zugeordnet werden, so wird das zugehörige Abrechnungskonto mit den anfallenden Gebühren belastet. Die Abrechnungstabelle kann dabei auch zeitabhängig sein. Ansonsten wird ein Standard-Abrechnungskonto belastet. Die Rechnungsstellung erfolgt vom Netzbetreiber direkt an die jeweiligen Kontoinhaber oder, nach Nutzern aufgeschlüsselt, an den Anschlußinhaber.

Figur 1B zeigt ein Flußdiagramm des erfindungsgemäßen Verfahrens mit zeitabhängiger personenbezogener Abrechnung. Der rufende Telefonanschluß ist dabei insbesondere der privat und geschäftlich genutzte Anschluß eines Heimarbeiters, hier der "Mutter". Wie bereits geschildert, ruft Teilnehmer A zu Beginn des Verfahrens eine Zielrufnummer an. Die Vergebührung beginnt, sobald Teilnehmer B abhebt.

Die Entscheidung, welches Abrechungskonto belastet werden soll, wird hier zunächst in Abhängigkeit von der aktuellen Anrufzeit und eines vorbestimmten Dienstzeit-Intervalls getroffen. Liegt der aktuelle Anruf außerhalb der Dienstzeit, so wird automatisch sprecherunabhängig das Standardabrechnungskonto belastet und der Anruf der Privatrechnung zugeordnet. Liegt der aktuelle Anruf innerhalb der Dienstzeit, so wird der rufende Teilnehmer mittels Spracherkennung identifiziert. Die Sprachsignale des rufenden Teilnehmers A werden dann automatisch analysiert und zum Zwecke der Zuordnung mit den Referenzdatensätzen verglichen. Der Referenzdatensatz ist im hier gezeigten Beispiel eine Sprachprobe oder ein Sprachmuster, das für die Heimarbeiterin "Mutter" charakteristisch ist. Wird diese als Sprecherin identifiziert, so werden die anfallenden Gebühren der Arbeitgeberrechnung zugeordnet. Spricht innerhalb der Dienstzeit eine andere Person, so werden die Gebühren automatisch der Privatrechnung zugeordnet. Die Vergebührung wird beendet, wenn auch das Gespräch beendet wird. Bei einem neuen Gespräch wird auch das Verfahren erneut durchgeführt.

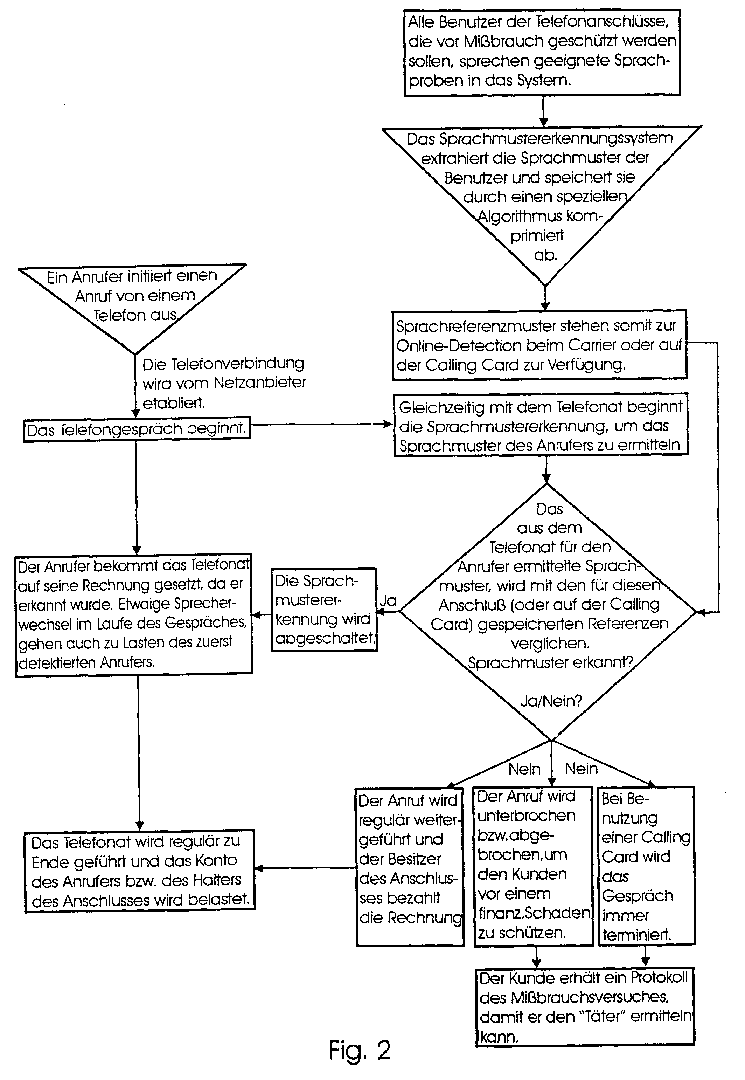

Figur 2 zeigt ein weiteres Ablaufdiagramm des erfindungsgemäßen Verfahrens. Vor Verfahrensbeginn sprechen alle Benutzer des Telefonanschlusses, die vor Mißbrauch geschützt werden sollen und bei denen personenbezogen abgerechnet werden soll. Sprachproben in das System. Die Spracherkennungseinheit bzw. ein Sprachmustererkennungssystem extrahiert die Sprachmuster der Benutzer und speichert sie, komprimiert durch einen Spracherkennungs-Algorithmus, als Referenzdaten ab. Die Sprachreferenzmuster stehen somit zur Online-Erkennung beim Netzanbieter, in einer Nebenstellenanlage oder auf der Calling Card eines Mobiltelefons zur Verfügung.

Das Verfahren beginnt, nachdem ein Anrufer von einem Telefon aus einen Anruf mitiiert, die Telefonverbindung vom Netzanbreter etabliert wird und das Telefongesprach beginnt. Glerchzeitig mit dem Telefonat beginnt die Sprachmustererkennung, um das Sprachmuster des Anrufers zu ermitteln. Dieses aus dem Telefonat für den Anrufer ermittelte Sprachmuster wird mit den für diesen Anschluß oder auf der Calling Card eines Mobiltelefons gespeicherten Referenzen verglichen.

Falls ein Sprachmuster erkannt wurde, d.h. eine Zuordnung des aktuellen Sprachsignals zu einer Referenz getroffen wurde, wird die Sprachmustererkennung für diese Kommunikationsverbindung abgeschaltet; ihre Rechenkapazität kann zur Analyse weiterer Gespräche dienen. Der Anrufer bekommt das Telefonat dann auf seine persönliche Rechnung gesetzt oder mit den Gebühren wird ein Konto belastet, das dem Benutzer, unter Umständen zusätzlich in Abhängigkeit von Anrufziel und -zeit, zugeordnet ist, z.B. das Konto des Arbeitgebers eines Heimarbeiters. Etwaige Sprecherwechsel werden nicht weiter identifiziert und gehen zu Lasten des zuerst detektierten Anrufers.

Falls kein Sprachmuster erkannt wurde, wird der Anruf regulär weitergeführt, wobei der Anschlußinhaber die Gebühren bezahlt. Alternativ wird der Anruf unterbrochen, um den Kunden vor einem finanziellen Schaden zu schützen. Bei der Benutzung eines Mobiltelefons mit Calling Card wird das Gespräch immer terminiert. Gegebenenfalls kann der Kunde ein Protokoll des Mißbrauchsversuchs erhalten, damit er die unberechtigt telefonierende Person ermitteln kann.

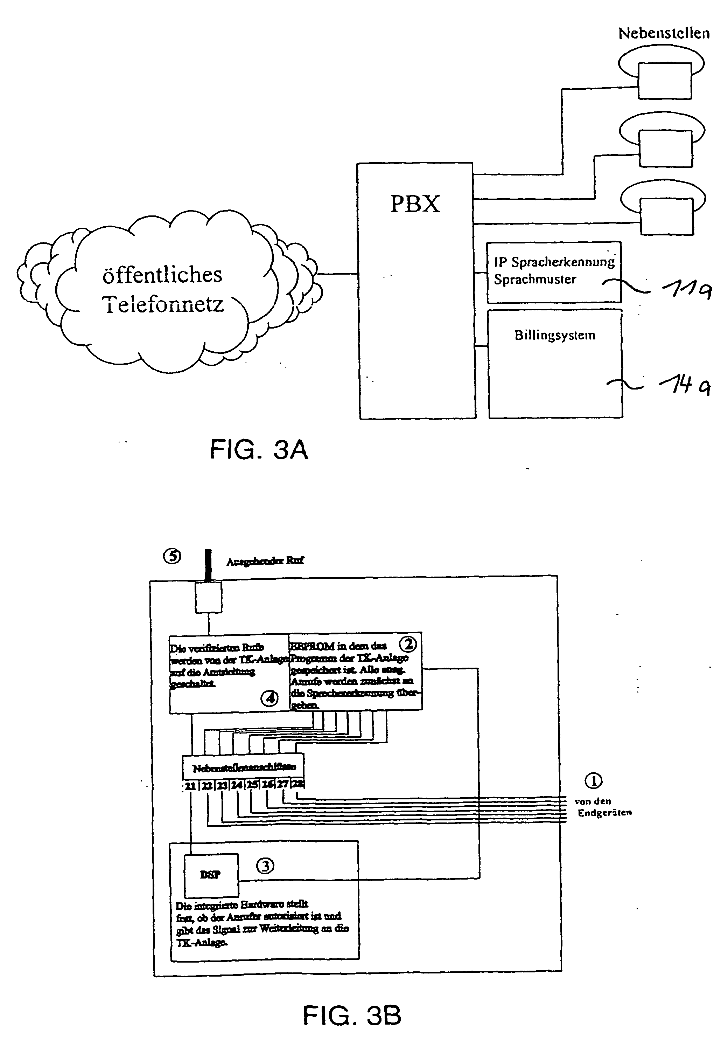

In den Figuren 3 bis 5 sind drei Möglichkeiten für die Umsetzung des erfindungsgemäßen Verfahrens in einem Kommunikationsnetz dargestellt.

Figur 3A zeigt dazu eine Nebenstellenanlage PBX, welche an ein öffentliches Telefonnetz angeschlossen ist. Die Nebenstellenanlage PBX weist eine Vielzahl von Nebenstellen auf, von denen hier drei dargestellt sind. Die Telefongespräche von Nutzern der einzelnen Nebenstellen sollen erfindungsgemäß personenbezogen abgerechnet werden. Dazu weist die Nebenstellenanlage ein Vergebührungssystem (Billingsystem) 14a auf, welches die Gebühren für einzelne Gespräche zu protokollieren imstande ist. Der Nebenstellenanlage PBX ist des weiteren eine Steuereinheit IP (Intelligent Peripheral 11a) zugeordnet, welche imstande ist, auf die Telefonleitung, über welche Signale von einer Nebenstelle an einen weiteren Anschluß außerhalb der Nebenstellenanlage übertragen werden, zuzugreifen und die vom Nebenstellennutzer eingegebenen Sprachsignale abzugreifen. Das IP 11a weist weiterhin eine Spracherkenungseinheit auf, welche das abgegriffene Sprachsignal zu analysieren und mit bereits als Abrechnungstabelle hinterlegten Referenzdatensätze zu vergleichen imstande ist. Dazu ist das IP 11a auch imstande, auf den Referenzdatensatz-Speicher zuzugreifen. Es sind entweder jeder Nebenstelle bestimmte Referenzdatensätze zugewiesen, welche den Nutzern dieser Nebenstelle zugeordnet sind, oder die Abrechnungstabelle enthält sämtliche potentielle Nutzer der gesamten Nebenstellenanlage unabhängig vom tatsächlichen Nebenstellenanschluß.

Wenn das IP 11a die aktuellen Sprachdaten einem der Referenzdatensätze zugeordnet hat, wird das diesem Referenzdatensatz zugeordnete Abrechnungskonto mit den vom Billingsystem 14a berechneten Gebühren belastet. Kann keine Zuordnung der aktuellen Sprachprobe zu einem der Referenzdatensätze getroffen werden, veranlaßt es die Zuordnung der Gebühren zu einem Standard-Abrechnungskonto.

Figur 3B zeigt ein Beispiel für die Realisierung personenbezogener Gebührenzuweisung durch Spracherkennung in einer Nebenstellenanlage.

In der Nebenstellenanlage werden im Falle der prozeduralen Authentifizierung, also Spracherkennung vor Verbindungsaufbau, alle von den an Nebenstellenanschlüsse (Ports 22 bis 28) angeschlossenen Endgeräten kommenden Anrufe auf einen Port (am gezeichneten Beispiel Port 21) umgeleitet. Diese Umleitung wird von der Steuereinheit der Nebenstellenanlage vorgenommen, die entsprechenden Programme sind beispielsweise in einem Speicherbaustein, hier einem EEPROM, hinterlegt. An den Port 21 ist ein Digitaler Signalprozessor DSP mit geeigneter Spracherkennungssoftware und ggfs. -hardware angeschlossen. Er gibt bei positiver Identifizierung das Signal zur Weiterleitung an die Nebenstellenanlage über die üblichen Steuerfunktionen, d.h. entweder über den Anschluß, eine V.24 Schnittstelle oder eine sonstige Managementschnittstelle. Die so verifizierten Rufe werden von der Nebenstellenanlage (TK-Anlage) auf die Amtsleitung geschaltet und bilden einen ausgehenden Ruf. Die Vergebührungsinformation zur personenabhängigen Kostenzuweisung wird direkt in das Vergebührungssystem eingespeist.

Im Falle der Online-Erkennung des Sprechers wird das Gespräch schon aufgebaut, wie beim "Abhören" eines Gesprächs wird aber die Gesprächsinforrnation seriell über den DSP gelenkt. Diese analysiert die Sprache, ohne die Übertragung zu beeinträchtigen, und gibt entsprechende Informationen an die Nebenstellenanlage bzw. das Vergebührungssystem weiter.

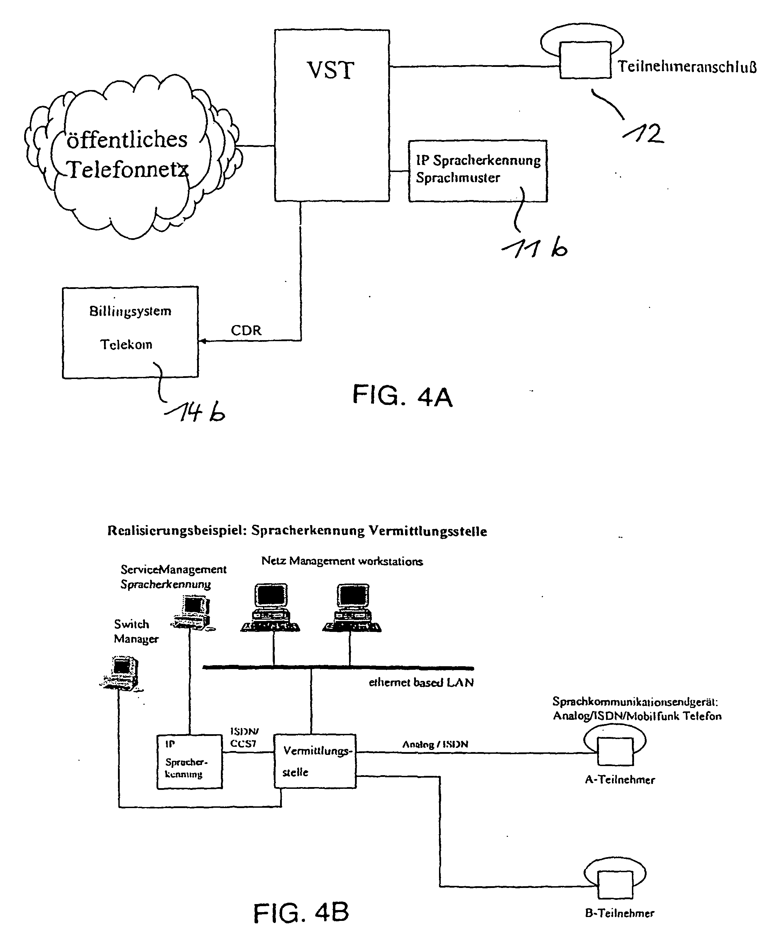

Figur 4A zeigt eine der Figur 3A entsprechende Anordnung der Steuereinheit IP 11b in einer Vermittlungsstelle. Über diese Vermittlungsstelle wird eine Verbindung vom Teilnehmeranschluß 12 zu einem weiteren Anschluß im öffentlichen Telefonnetz hergestellt. Die Vermittlungsstelle ist zwar räumlich und organisatorisch dem Teilnehmeranschluß 12 zugeordnet, befindet sich jedoch nicht notwendig im unmittelbarer räumlicher Nähe. Das Telefonnetz weist des weiteren ein Vergebührungssystem (Billingsystem) 14b auf, welches von der Vermittlungsstelle durch Übermittlungs von Gebührensignalen (CDR, Call Data Records) Informationen über den rufenden Anschluß bzw. das zu belastende Konto sowie die anfallenden Gebühren erhält. Abgesehen von der unterschiedlichen räumlichen Anordnung des IP 11 b wird die personenbezogene Abrechnung hier so, wie bereits beschrieben, durchgeführt. Der Unterschied besteht darin, daß auf Seiten des Teilnehmers keine Intelligenz zur Spracherkennung und zur Sprachspeicherung zur Verfügung gestellt werden muß, da sie zentral in die Vermittlungsstelle integriert ist.

Figur 4B zeigt ein Beispiel für die Realisierung personenbezogener Gebührenzuweisung durch Spracherkennung in einer Vermittlungsstelle eines Telefonnetzes.

Das Spracherkennungssystem IP kann auf einem Computer, zum Beispiel in Form einer Steckkarte in der Vermittlungsstelle, realisiert werden. Anrufe, deren Sprecher identifiziert werden soll, werden von der Vermittlungsstelle über das IP geroutet.

Entweder wird die Spracherkennung in Dialogform realisiert, d.h. es wird eine Authentifikationsprozedur durchlaufen, wie oben unter Fig. 3B geschildert, oder aber die Sprache wird online erkannt. In letzterem Falle wird das Sprachmuster während des laufenden Gespräches untersucht und Charakteristika der Sprache des sprechenden A-Teilnehmers mit den hinterlegten Mustern verglichen. In diesem Fall wird das Gespräch vom IP sozusagen abgehört, ohne es zu stören.

Eine mögliche Struktur bei der Authentifikationsprozedur ist die Einwahl in den DSP des IP. Der Telefonkanal wird dazu auf einen Eingang des IP gelenkt. Hier wird der A-Teilnehmer über die Software eines Intelligent Voice Response Systems, nach seinem Namen oder seiner Kennung gefragt. Danach wird er nach einem Kennwort bzw. seiner persönlichen Identifizierungsnummer PIN gefragt. Zum einen werden die Daten mit dem im Speicher hinterlegten Kennung verglichen, zum anderen wird das Sprachmuster, sei es über Frequenzspektren oder Sprachdynamik mit den hinterlegten Mustern verglichen. Bei der Dialogform ist die Realisierung der Spracherkennung sehr einfach, da es sich bei der Kennung um genau definierte Wörter handelt, die zuvor eingegebene wurden.

Nach der Authentifizierung im IP wird der Kunde in ein Menü geführt, das von ihm die Eingabe der gewünschten Rufnummern verlangt. Diese wird wie in herkömmlichen Messaging oder Voice Response Systemen erfaßt und in Puls- oder Mehrfrequenzwahlinformation umgewandelt ins Netz geschickt, oder als Signale im Format des Zeichengabesystems Nr. 7 (Common Channel Number 7, CCS7) an die Vermittlungsstelle weitergeleitet. Die Vermittlungsstelle leitet dann den Verbindungsaufbau zum B-Teilnehmer ein Die Verwendung von CCS7-Signalen erlaubt eine schnellere Abwicklung und mehr Leistungsmerkmale - nämlich alle im CCS7 realisierten und für das IP freigeschaltete - sowie einfachere Abrechnung über die Gebührendatensignale CDR der Vermittlungsstelle.

Die so erzeugten sprecheridentifizierenden Datensätze könne sowohl für die Vergebührung eines Anrufs als auch für die Zugangskontrolle genutzt werden. Die entsprechenden Abläufe sind in den Flußdiagrammen beschrieben.

Bei der Erkennung kontinuierlicher Sprache konzentriert sich das System vorzugsweise auf die wesentlichen Charakteristika der Sprache. Zwar können Schlüsselwörter wie "Guten Tag", Hallo" u.a. bei der Eingabeprozedur berücksichtigt werden, im Grundsatz ist es aber nötig, sprecherspezifische Charakteristika zu hinterlegen, unabhängig davon, welche Sprache und mit wem der Teilnehmern spricht. Hierzu kann der Algorithmus statische Methoden wie Frequenzspektrum-Analyse ebenso wie dynamische Sprachcharakteristika verwenden.

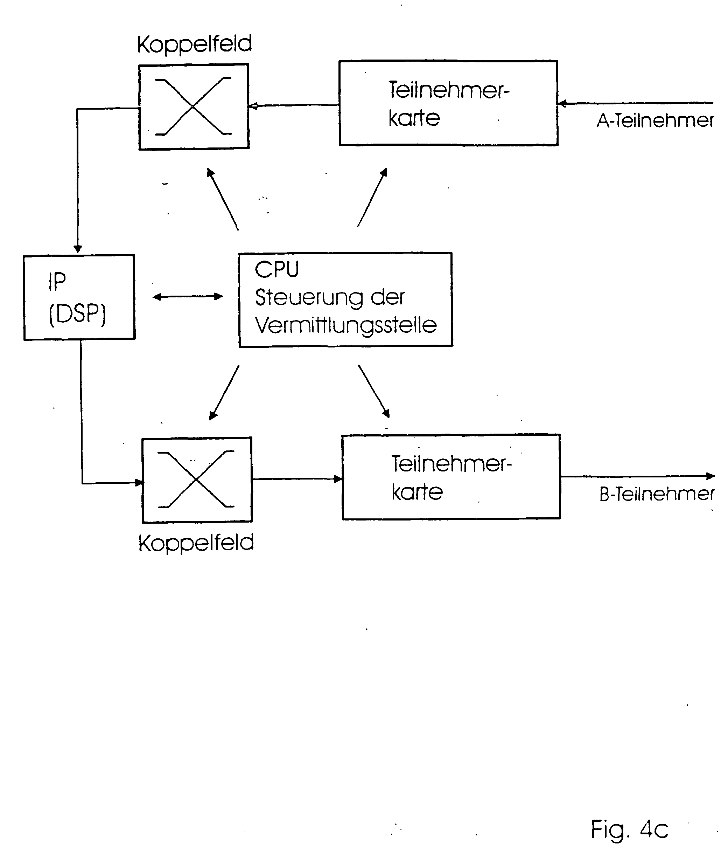

Figur 4C zeigt ein weiteres Beispiel für die Umsetzung des erfindungsgemäßen Verfahrens in einer Vermittlungsstelle. Die Teilnehmereinheit (Teilnehmerkarte) des A-Teilnehmers erkennt, ob der Teilnehmer Spracherkennung zur personenbezogenen Gebührenzuweisung vorgesehen hat. Der Zentralprozessor der Vermittlungsstelle CPU leitet das entsprechende Routing über das Koppelfeld, die eigentliche Vermittlungseinheit, ein. Dadurch wird der Anruf nicht direkt zum B-Teilnehmer bzw. zur nächsten Vermittlungsstelle weitergeleitet, sondern zuerst über ein Intelligent Peripheral IP mit einem Digitalen Signalprozessor DSP gelenkt. Der Ausgangsport des IP wird über das Koppelfeld zum B-Teilnehmer oder zur nächsten Vermittlungsstelle geführt.

Alle Steuerinformationen und damit auch das Ergebnis der Spracherkennung werden in der Vermittlungssstelle mit dem Zentralprozessor CPU abgeglichen. Die CPU leitet die Gebührenzuweisung in an sich bekannter Weise ein.

Das IP kann auch mehrere Spracherkennungseinheiten bzw. DSPs enthalten und damit mehrere Leitungen gleichzeitig analysieren. Die Informationen über die Auslastung des IP und über Analyseergebnisse werden zur CPU übertragen.

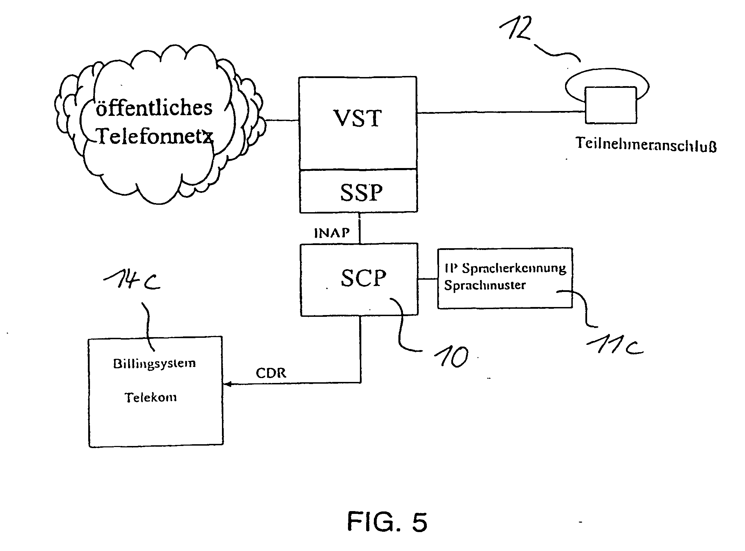

Figur 5 zeigt die Umsetzung des erfindungsgemäßen Verfahrens im Service Control Point SCP 10 eines Intelligenten Netzes.

Bei der Realisierung im IN werden die Sprachdaten über einen ISDN-Kanal zur Spracherkennungseinheit IP gesteuert, welche sich am Ort des SCP 10 befindet. Steuerinformationen, beispielsweise ob der rufende Anschluß Spracherkennung zur Gebührenzuordnung nutzt, Ergebnisse der Sprachanalyse, Zuordnung der Gebühren zu einem Abrechnungskonto und dergleichen, werden dann zwischen dem SCP 10 und dem Service Switching Point SSP, der sich am Ort der Vermittlungsstelle befindet, ausgetauscht.

Die Umsetzung des erfindungsgemäßen Verfahrens im zentralistisch strukturierten IN ermöglicht eine zentrale Realisierung der personenbezogenen Gebührenzuordnung über eine große Netzfläche, d.h. eine Vielzahl von Anschlüssen. Notwendige Soft- und Hardwareaufrüstungen an den Vermittlungsstellen entfallen damit, nur das IN muß angepaßt werden. Diese Realisierung eignet sich daher besonders bei geringer Nachfrage oder in der Einführungsphase, d.h. wenn sich die Aufrüstung jeder Vermittlungsstelle noch nicht lohnt.

### Gewerbliche Anwendbarkeit:

Die Erfindung ist ein weiterer Schritt in Richtung von anschlußunabhängigen, aber nutzerspezifischen Dienstleistungen und damit zu mehr Flexibilität im Bereich Telekommunikation. Sie eignet sich daher inbesondere für Betreiber von Kommunikationsnetzen und für Betreiber von Nebenstellenanlagen zur Vereinfachung der Abrechnung von Sprachtelefonie-Leistungen. Gleichzeitig besteht die Möglichkeit, die Zugangsberechtigung einzelner Nutzer zu kontrollieren und somit die Mißbrauchssicherheit zu verbessern.

## Patentansprüche

1. Verfahren zur Gebührenabrechung für die Sprachtelefonie an einem Festnetz- oder Mobiltelefonanschluß (12,21,22,23,24,25,26,27,28), **gekennzeichnet durch** folgende Merkmale:
a) Vor oder nach Aufbau der Kommunikationsverbindung zum gerufenen Teilnehmer (B) werden Sprachsignale des rufenden Teilnehmers (A) aufgezeichnet, mittels Spracherkennungs-Algorithmen analysiert und zum Zwecke der Zuordnung mit einem Referenzdatensatz oder mehreren Referenzdatensätzen verglichen, wobei die Sprachsignale des rufenden Teilnehmers (A) an den gerufenen Teilnehmer (B) weitergeleitet werden, falls die Kommunikationsverbindung bereits besteht;
b) ein Referenzdatensatz ist einem Abrechnungskonto in eindeutiger Weise zugeordnet;
c) die Gebühren für die Kommunikationsverbindung werden in an sich bekannter Weise bestimmt;
d) mit den Gebühren wird dasjenige Abrechnungskonto belastet, dem der Referenzdatensatz zugeordnet ist, welchem die Sprachsignale zugeordnet wurden, oder es wird ein Standard-Abrechnungskonto belastet, wenn keine Zuordnung zu einem Referenzdatensatz getroffen werden kann.

2. Verfahren nach Anspruch 1, **dadurch gekennzeichnet,**
**daß** Sprachsignale des rufenden Teilnehmers (A) aufgezeichnet und als Sprachprobe zwischengespeichert werden und die gespeicherte Sprachprobe mittels Spracherkennungs-Algorithmen analysiert wird.

3. Verfahren nach Anspruch 2, **dadurch gekennzeichnet,**
**daß** der Referenzdatensatz bzw. die Referenzdatensätze ist bzw. sind in einem Speicherplatz hinterlegt, der dem Festnetz- bzw. Mobiltelefonanschluß (12,21,22,23,24,25,26,27,28) in eindeutiger Weise zugeordnet ist.

4. Verfahren nach einem der Ansprüche 1 bis 3, **dadurch gekennzeichnet,**
**daß** die Referenzdatensätze Referenz-Sprachproben sind, welche bestimmten, von einer Person gesprochenen Wörtern entsprechen, und die Spracherkennungs-Algorithmen die Sprachsignale hinsichtlich des Auftretens von Teilen, die mit der Referenz-Sprachprobe innerhalb einer vorgegebenen Toleranz übereinstimmen, analysiert.

5. Verfahren nach einem der Ansprüche 1 bis 3, **dadurch gekennzeichnet,**
**daß** die Referenzdatensätze Referenz-Sprachmustern entsprechen, die unabhängig vom Bedeutungsinhalt sind und für eine Person charakteristisch sind, z.B. einer bestimmten Frequenzverteilung oder Sprachmelodie gesprochener Sprache, und die Spracherkennungs-Algorithmen durch statistische und/oder dynamische Auswertung der Sprachsignale ein entsprechendes Sprachmuster des rufenden Teilnehmers (A) erstellen, welches mit den Referenz-Sprachmustern verglichen wird.

6. Verfahren nach einem der vorangegangenen Ansprüche, **dadurch gekennzeichnet,**
**daß** die Sprachsignale während eines vorbestimmten Zeitintervalls nach Beginn der Kommunikationsverbindung analysiert werden.

7. Verfahren nach einem der vorangegangenen Ansprüche, **dadurch gekennzeichnet,**
**daß** während der gesamten Kommunikationsverbindung in regelmäßigen zeitlichen Abständen Sprachsignale analysiert werden, um einen Sprecherwechsel zu detektieren, und im Falle eines Sprecherwechsels die Gebühren für den jeweiligen Abschnitt der Kommunikationsverbindung dem Abrechnungskonto des aktuellen Sprechers zugeordnet werden.

8. Verfahren nach einem der Ansprüche 2 bis 7, **dadurch gekennzeichnet,**
**daß** die zwischengespeicherte Sprachprobe nach Beendigung der Sprachanalyse oder nach Beendigung der Kommunikationsverbindung gelöscht wird.

9. Verfahren nach einem der vorangegangenen Ansprüche, **dadurch gekennzeichnet,**
**daß** die Belastung des einem Referenzdatensatz zugeordneten Abrechnungskontos nur zu vorbestimmten Tages- und/oder Wochenzeiten und/oder nur für vorbestimmte Anrufziele durchgeführt wird und für Verbindungen außerhalb dieser Zeiten bzw. andere Anrufziele automatisch das Standard-Abrechungskonto des Anschlusses belastet wird.

10. Verfahren nach einem der vorangegangenen Ansprüche, **dadurch gekennzeichnet,**
**daß** durch Eingabe einer Tastenkombination und/oder eines akustischen Signals vor Beginn der Kommunikationsverbindnung die Zuweisung der anfallenden Gebühren zu einem bestimmten Abrechnungskonto sprecherunabhängig erzwungen werden kann.

11. Verfahren nach einem der vorangegangenen Ansprüche, **dadurch gekennzeichnet,**
**daß** die Kommunikationsverbindung automatisch unterbrochen wird, falls die Sprachsignale keinem Referenzdatensatz zugeordnet werden können.

12. Kommunikationsnetz mit einer Mehrzahl von Festnetz- oder Mobilfunkanschlüssen (12,21,22,23,24,25,26,27,28) sowie technischen Mitteln zur Herstellung einer Kommunikationsverbindung zwischen zwei oder mehr Anschlüssen desselben oder eines anderen Kommunikationsnetzes sowie mit einem Vergebührungssystem (14a,14b,14c), welches ausgelegt ist, Gebühren für eine Kommunikationsverbindung zu bestimmen und einem Abrechnungskonto zuzuweisen, **gekennzeichnet durch** folgende Merkmale:
a) es sind Mittel vorhanden, die auf eine Datenleitung, über welche Sprachsignale vom rufenden Anschluß zum gerufenen Anschluß wenigstens teilweise übertragen werden, zuzugreifen imstande sind,
b) es ist wenigstens ein Speicher vorhanden, in welchem Referenzdatensätze hinterlegt sind, welche einem vorbestimmten Abrechungskonto zugeordnet sind,
c) es ist wenigstens eine Steuereinheit (11a,11b,11c) mit einer Spracherkennungseinheit vorhanden, welche die abgegriffenen Sprachsignale mittels Spracherkennungs-Algorithmen zu analysieren und **durch** Vergleich mit einem Referenzdatensatz oder mehreren Referenzdatensätzen einem Abrechungskonto zuzuordnen sowie die Erzeugung eines diese Zuordnung anzeigenden Signals zu veranlassen und dem Vergebührungssystem (14a,14b,14c) zu übermitteln imstande ist.

13. Kommunikationsnetz nach Anspruch 12, **dadurch gekennzeichnet,**
**daß** wenigstens ein Speicher vorhanden ist, in welchem die abgegriffenen Sprachsignale als Sprachprobe zwischengespeichert werden und auf den die Steuereinheit (11a,11b,11c) zur Analyse des Sprachsignals bzw. der Sprachprobe zuzugreifen imstande ist.

14. Kommunikationsnetz nach Anspruch 12 oder 13, **dadurch gekennzeichnet,**
**daß** die Steuereinheit (11a,11b,11c) und die Speicher innerhalb einer Telefonanlage, insbesondere Nebenstellenanlage, angeordnet sind, die ein Vergebührungssystem aufweist, das Gebühren einzelnen Nebenstellennutzern zuzuweisen imstande ist, wobei die gespeicherten Referenzdatensätze Referenz-Sprachproben oder -Sprachmustern einzelner Nebenstellennutzer entsprechen und das Abrechungskonto desjenigen Nebenstellennutzers, gegebenenfalls in Abhängigkeit von Anrufzeit, -ziel oder weiteren Parametern, mit den vom Vergebührungssystem berechneten Gebühren belastet wird, dessen Sprachprobe oder Sprachmuster von der Spracherkennungseinheit erkannt wurde.

15. Kommunikationsnetz nach Anspruch 12 oder 13, **dadurch gekennzeichnet,**
**daß** die Steuereinheit (11a,11b,11c) und die Speicher einer Vermittlungsstelle zugeordnet sind, wobei im Referenzdaten-Speicher Referenzdaten wenigstens eines Teils der der Vermittlungsstelle zugeordneten Anschlüsse hinterlegt sind, und die Steuereinheit ausgelegt ist, (11a,11b,11c) die Vermittlungsstelle zur Erzeugung von Gebührensignalen, Call Data Records, zu veranlassen, welche Informationen über das identifizierte Abrechungskonto enthalten und welche von der Vermittlungsstelle an das Vergebührungssystem (14a,14b,14c) des Kommunikationsnetzes übertragen werden.

16. Kommunikationsnetz nach Anspruch 12 oder 13, **dadurch gekennzeichnet,**
**dass** die Steuereinheit (11c) und der Referenzdaten- bzw. Sprachproben-Speicher einem SCP, Service Control Point (10), eines Intelligenten Netzes zugeordnet sind und die Steuereinheit ausgelegt ist, (11c) den SCP (10) zur Erzeugung von Gebührensignalen, Call Data Records, zu veranlassen, welche Informationen über das identifizierte Abrechungskonto enthalten und welche vom SCP (10) an das Vergebührungssystem (14c) des Intelligenten Netzes übertragen werden.

## Claims

1. Method of billing for voice telephony on a land line or mobile telephone line (12, 21, 22, 23, 24, 25, 26, 27, 28) **characterized by** the following features:
a) Before or after setup of the communication connection to the called subscriber (B), voice signals of the calling subscriber (A) are recorded, analyzed by means of voice recognition algorithms, and compared to one or more reference data records for the purpose of assignment, the voice signals of the calling subscriber (A) being forwarded to the called subscriber (B) in the event that the communication connection has already been established;
b) a reference data record is assigned in an unambiguous manner to a billing account;
c) the charges for the communication connection are determined in a manner known per se;
d) the charges are charged against the billing account associated with the reference data record to which the voice signals were assigned, or if no assignment to a reference data record can be made a standard billing account is charged.

2. Method according to claim 1, **characterized in that**
voice signals of the calling subscriber (A) are recorded and temporarily stored as a voice sample, and the stored voice sample is analyzed by means of voice recognition algorithms.

3. Method according to claim 2, **characterized in that**
the reference data record or records is or are stored in a storage location that is associated in an unambiguous manner with the land line or mobile telephone line (12, 21, 22, 23, 24, 25, 26, 27, 28).

4. Method according to one of claims 1 through 3, **characterized in that**
the reference data records are reference voice samples which correspond to certain words spoken by a person, and the voice recognition algorithms analyze the voice signals with respect to the occurrence of portions that match the reference voice sample within a predetermined tolerance.

5. Method according to one of claims 1 through 3, **characterized in that**
the reference data records correspond to reference voice patterns that are independent of meaning and are characteristic for a person, e.g. a specific frequency distribution or intonation of speech, and the voice recognition algorithms use statistical and/or dynamic evaluation of the voice signals to create an appropriate voice pattern for the calling subscriber (A), which pattern is compared to the reference voice patterns.

6. Method according to one of the preceding claims, **characterized in that**
the voice signals are analyzed during a predetermined time interval after the start of the communication connection.

7. Method according to one of the preceding claims, **characterized in that**
voice signals are analyzed at regular time intervals throughout the entire communication connection in order to detect a change of speaker, and in the event of a change of speaker, the charges for the corresponding segment of the communication connection are assigned to the billing account of the current speaker.

8. Method according to one of claims 2 through 7, **characterized in that**
the temporarily stored voice sample is deleted after the voice analysis ends or after the communication connection ends.

9. Method according to one of the preceding claims, **characterized in that**
charges are only charged against the billing account assigned to a reference data record at predetermined times of day and/or times of the week and/or only for predetermined call destinations, while the standard billing account for the line is automatically charged for connections outside of these times or other call destinations.

10. Method according to one of the preceding claims, **characterized in that**
the assignment of incurred charges to a specific billing account can be forced regardless of speaker by the entry of a key combination and/or an acoustic signal prior to the start of the communication connection.

11. Method according to one of the preceding claims, **characterized in that**
the communication connection is automatically broken if the voice signals cannot be associated with any reference data record.

12. Communication network having a plurality of land lines or mobile telephone lines (12, 21, 22, 23, 24, 25, 26, 27, 28) and also having technical means to establish a communication connection between two or more lines of the same or a different communication network, and also having a call metering system (14a, 14b, 14c), which system is designed to determine charges for a communication connection and assign them to a billing account, **characterized by** the following features:
a) means are present that are capable of accessing a data line over which voice signals from the calling line to the called line are transmitted at least in part,
b) at least one storage is present in which are stored reference data records that are assigned to a predetermined billing account,
c) at least one control unit (11a, 11b, 11c) with a voice recognition unit is present, which is capable of analyzing the tapped voice signals by means of voice recognition algorithms, assigning a billing account by comparison with one or more reference data records, and generating a signal indicating said assignment and transmitting said signal to the call metering system (14a, 14b, 14c).

13. Communication network according to claim 12, **characterized in that**
at least one storage is present in which the tapped voice signals are temporarily stored as a voice sample, and which the control unit (11a, 11b, 11c) is capable of accessing to analyze the voice signal or voice sample.

14. Communication network according to claim 12 or 13, **characterized in that**
the control unit (11a, 11b, 11c) and the storage are disposed within a telephone system, especially a private branch exchange, that has a call metering system capable of assigning the charges to individual private branch exchange users, the stored reference data records corresponding to reference voice samples or voice patterns of individual private branch exchange users, and charges calculated by the call metering system - possibly as a function of call time, call destination or further parameters - being charged against the billing account of the private branch exchange user whose voice sample or voice pattern was recognized by the voice recognition unit.

15. Communication network according to claim 12 or 13, **characterized in that**
the control unit (11a, 11b, 11c) and the storage are associated with an exchange, reference data for at least a portion of the lines assigned to the exchange being stored in the reference data storage, and the control unit (11a, 11b, 11c) being designed to cause the exchange to generate metering signals, Call Data Records, which contain information on the identified billing account and are transmitted by the exchange to the call metering system (14a, 14b, 14c) of the communication network.

16. Communication network according to claim 12 or 13, **characterized in that**
the control unit (11c) and the reference data storage or voice sample storage are associated with an SCP, Service Control Point (10), of an intelligent network, and the control unit (11c) is designed to cause the SCP (10) to generate metering signals, Call Data Records, which contain information on the identified billing account and are transmitted by the SCP (10) to the call metering system (14c) of the intelligent network.

## Revendications

1. Procédé servant au décompte des frais pour la téléphonie vocale sur un poste fixe ou un portable (12, 21, 22, 23, 24, 25, 26, 27, 28), **caractérisé par les éléments suivantes:**
a) avant ou après l'établissement de la liaison de communication vers l'abonné appelé (B), des signaux vocaux de l'abonné appelant (A) sont enregistrés, analysés grâce à des algorithmes de reconnaissance vocale et comparés à un enregistrement de référence ou à plusieurs enregistrements de référence afin de pouvoir les attribuer, les signaux vocaux de l'abonné appelant (A) étant transmis à l'abonné appelé (B) si la communication existe déjà ;
b) un enregistrement de référence est attribué de manière claire à un compte de paiement ;
c) les frais pour la liaison de communication sont définis de manière connue ;
d) les frais sont déduits du compte de paiement auquel est attribué l'enregistrement de référence et auquel ont été attribués les signaux vocaux,
ou bien les frais sont déduits d'un compte de paiement standard si aucune attribution à un enregistrement de référence ne peut être effectuée.

2. Procédé selon la revendication 1, **caractérisé en ce que** les signaux vocaux de l'abonné appelant (A) sont enregistrés et mémorisés de manière temporaire en tant qu'échantillon vocal et que l'échantillon vocal mémorisé est analysé grâce aux algorithmes de reconnaissance vocale.

3. Procédé selon la revendication 2, **caractérisé en ce que** l'enregistrement de référence ou les enregistrements de référence est ou sont stocké(s) dans un emplacement de mémoire qui est clairement attribué à un poste fixe ou à un portable (12, 21, 22, 23, 24, 25, 26, 27, 28).

4. Procédé selon l'une des revendications 1 à 3, **caractérisé en ce que** les enregistrements de référence sont des échantillons vocaux de référence correspondant à des mots spécifiques prononcés par une personne et que les algorithmes de reconnaissance vocale analysent les signaux vocaux par rapport à l'apparition de segments correspondant à l'échantillon vocal de référence à l'intérieur d'une plage de tolérance prédéfinie.

5. Procédé selon l'une des revendications 1 à 3, **caractérisé en ce que** les enregistrements de référence correspondent à des échantillons vocaux de référence qui sont indépendants du contenu et typiques pour une personne, par exemple à un certain allotissement de fréquences ou une mélodie vocale de la langue parlée, et que les algorithmes de reconnaissance vocale établissent un échantillon vocal de l'abonné appelant (A) par une analyse statistique et/ou dynamique des signaux vocaux comparé aux échantillons vocaux de référence.

6. Procédé selon les revendications précédentes, **caractérisé en ce que** les signaux vocaux sont analysés pendant un laps de temps prédéfini après le début de la liaison de communication.

7. Procédé selon les revendications précédentes, **caractérisé en ce que** pendant toute la communication les signaux vocaux sont analysés à des intervalles temporaires réguliers afin de détecter un changement de locuteur et que, dans le cas d'un changement de locuteur, les frais pour le segment concerné de la liaison de communication sont attribués au compte de paiement du locuteur actuel.

8. Procédé selon l'une des revendications 2 à 7, **caractérisé en ce que** l'échantillon vocal mémorisé temporairement est effacée après l'arrêt de l'analyse vocale ou après l'arrêt de la liaison de communication.

9. Procédé selon les revendications précédentes, **caractérisé en ce que** le compte de paiement attribué à un enregistrement de référence n'est débité qu'à des heures prédéfinies de la journée et/ou de la semaine et/ou que pour des destinations d'appel prédéfinies et pour des communications en-dehors de ces horaires ou pour d'autres destinations d'appel le compte de paiement standard du raccordement est automatiquement débité.

10. Procédé selon les revendications précédentes, **caractérisé en ce que,** grâce à l'entrée d'une combinaison de touches et/ou un signal acoustique avant le début de la liaison de communication, l'attribution des frais produits à un compte de paiement défini peut être forcée indépendamment du locuteur.

11. Procédé selon les revendications précédentes, **caractérisé en ce que** la liaison de communication est automatiquement interrompue si les signaux vocaux ne peuvent pas être attribués à un enregistrement de référence.

12. Réseau de communication comportant plusieurs postes fixes ou portables (12, 21, 22, 23, 24, 25, 26, 27, 28) ainsi que des moyens techniques pour l'établissement d'une liaison de communication entre deux ou plusieurs raccordements du dit réseau de communication ou d'un autre réseau de communication ainsi qu'un système de taxation (14a, 14b, 14c) pour la détermination des frais d'une liaison de communication et pour l'attribution de ces frais à un compte de paiement, **caractérisé par les caractéristiques suivantes :**
a) il existe des moyens capables d'accéder à une ligne de transmission de données par laquelle sont transmises au moins partiellement des signaux vocaux du raccordement appelant vers le raccordement appelé,
b) il existe au moins une mémoire, dans laquelle sont enregistrés les enregistrements de référence attribués à un compte de paiement prédéfini,
c) il existe au moins une unité de commande (11a, 11b, 11c) avec une unité de reconnaissance vocale capable d'analyser les signaux vocaux prélevés à l'aide d'algorithmes de reconnaissance vocale et de les attribuer à un compte de paiement par la comparaison avec un enregistrement de référence ou plusieurs enregistrements de référence ainsi que de générer un signal affichant cette attribution et de le transmettre au système de taxation (14a, 14b, 14c).

13. Réseau de communication selon la revendication 12, **caractérisé en ce qu'**il y a au moins une mémoire dans laquelle sont enregistrés les signaux vocaux prélevés en tant qu'échantillon vocal et auquel peut accéder l'unité de commande (11a, 11b, 11c) pour l'analyse du signal vocal ou de l'échantillon vocal.

14. Réseau de communication selon la revendication 12 ou 13, **caractérisé en ce que** l'unité de commande (11a, 11b, 11c) et les mémoires sont disposées à l'intérieur de l'installation téléphonique, notamment d'une installation secondaire, disposant d'un système de taxation capable d'attribuer les frais à différents utilisateurs de l'installation secondaire, les enregistrements de référence enregistrés correspondant à des échantillons vocaux de référence ou des échantillons vocaux de diverses utilisateurs de l'installation secondaire et le compte de paiement du dit utilisateur de l'installation secondaire, dont l'échantillon vocal ou l'échantillon vocale a été reconnu par l'unité de reconnaissance vocale, est chargé avec les frais calculés par le système de taxation et cela éventuellement dépendant du temps d'appel, de la destination d'appel ou d'autres paramètres.

15. Réseau de communication selon la revendication 12 ou 13, **caractérisé en ce que** l'unité de commande (11a, 11b, 11c) et les mémoires sont attribués à un central de communication, des enregistrements de référence d'au moins une partie des raccordements attribués au central de communication étant mémorisés dans la mémoire des enregistrements de référence, et l'unité de commande (11a, 11b, 11c) pouvant amener le central de communication à générer des signaux de frais, les Call Data Records, disposant d'informations sur le compte de paiement identifié et qui sont transmis au système de taxation (14a, 14b, 14c) du réseau de communication par le central téléphonique.

16. Réseau de communication selon la revendication 12 ou 13, **caractérisé en ce que** l'unité de commande (11c) et la mémoire des enregistrements de référence ou des échantillons vocaux sont attribués à un SCP, Service Control Point (10), d'un réseau intelligent et que l'unité de commande (11c) peut amener le SCP à générer des signaux de frais, les Call Data Records, contenant des informations sur le compte de paiement identifié et étant transmis du SCP au système de taxation (14c) du réseau intelligent.
